# FASCICULE DE BREVET EUROPEEN

(11) **EP 3 323 484 B1**
(45) Date de publication et mention de la délivrance du brevet: **08.01.2020**
(21) Numéro de dépôt: 17306534.3
(22) Date de dépôt: 06.11.2017
(51) Int. Cl.: B01D 3/00, B01D 3/32, B01J 19/30, B01D 53/18, B01D 53/26, B01D 3/20

(54) **PLÂTEAU DISTRIBUTEUR POUR COLONNE D'ÉCHANGE COMPRENANT UN MATÉRIAU DISPERSIF AU SEIN D'UNE CHEMINÉE POUR LE PASSAGE DU GAZ ET SON UTILISATION DANS LA COLONNE**
VERTEILUNGSPLATTFORM FÜR AUSTAUSCHKOLONNE, DIE EIN DISPERSIVES MATERIAL IN EINEM KAMIN ZUM DURCHLASSEN DES GASES UMFASST, UND SEINE VERWENDUNG IN DER AUSTAUSCHKOLONNE
DISTRIBUTION TRAY FOR EXCHANGE COLUMN COMPRISING A DISPERSIVE MATERIAL WITHIN A CHIMNEY FOR THE PASSAGE OF GAS AND ITS USE IN THE EXCHANGE COLUMN

(30) Priorité: 22.11.2016 FR 1661339
(43) Date de publication de la demande: 23.05.2018
(73) Titulaire: IFP Energies nouvelles, 92852 Rueil-Malmaison Cedex (FR)
(72) Inventeur: BRAHEM, Rim, 69007 LYON (FR); ALIX, Pascal, 38150 ROUSSILLON (FR); ROESLER, John, 38200 VIENNE (FR)
(74) Mandataire: IFP Energies nouvelles

(56) Documents cités:
- EP-A2- 0 206 524
- US-A- 4 427 605
- US-A1- 2009 049 864
- US-A1- 2015 352 462

## Description

La présente invention concerne le domaine des colonnes de contact gaz/liquide, et plus particulièrement les colonnes pour les unités de traitement de gaz, de captage du CO₂, de déshydratation, ou encore de distillation.

Les unités de traitement de gaz et/ou de captage du CO₂ par lavage aux amines et/ou de distillation et/ou de déshydratation comprennent des colonnes d'échange de matière et/ou de chaleur entre un gaz et un liquide, il peut s'agir par exemple de colonne d'absorption et de régénération de fluides, liquide ou gazeux. Ces colonnes fonctionnent en écoulement gaz/liquide à contre-courant ou à co-courant.

Les colonnes utilisées dans ces unités de traitement de gaz et/ou de captage de CO₂ et/ou de distillation et/ou de déshydratation fonctionnent généralement sur le principe d'un échange de matière et/ou de chaleur entre le gaz et le fluide qui circulent dans les colonnes.

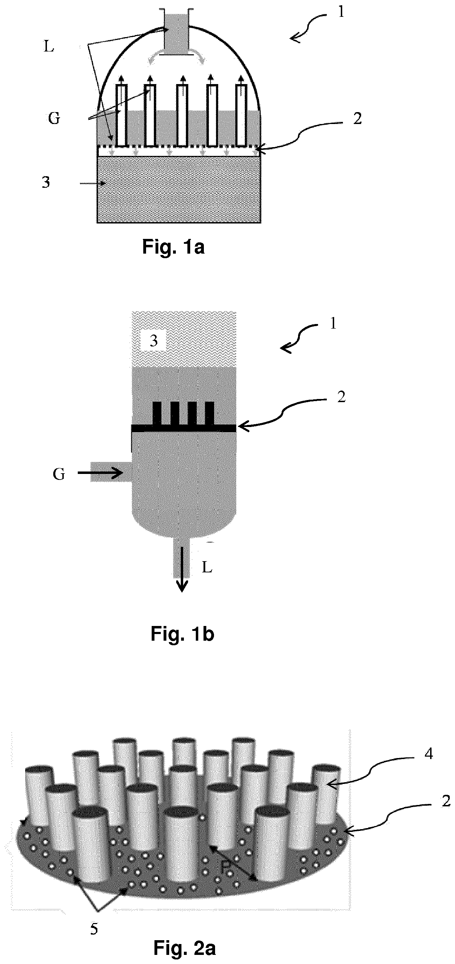

La figure 1a représente une réalisation possible de la partie supérieure d'une colonne de traitement de gaz 1 (partie dite tête de colonne) et la figure 1b représente une réalisation possible de la partie inférieure d'une colonne de traitement de gaz 1 (partie dite fond de colonne). Classiquement, une colonne de traitement de gaz 1 comporte plusieurs sections 3 remplies par un contacteur, un plateau distributeur 2 étant disposé entre chaque section 3. Le contacteur gaz/liquide met en contact le gaz G et le liquide L afin de permettre les échanges. L'objectif du plateau distributeur est de distribuer le liquide L et le gaz G de manière homogène sur le contacteur gaz/liquide 3. Dans le cas particulier de la tête de colonne tel que présenté en figure 1a, un plateau distributeur de gaz 2 est disposé au-dessus d'une section remplie par un contacteur 3. Dans le cas particulier du fond de colonne tel que présenté en figure 1b, un plateau distributeur de gaz 2 est disposé en fond de colonne, en-dessous d'une section remplie par un contacteur 3.

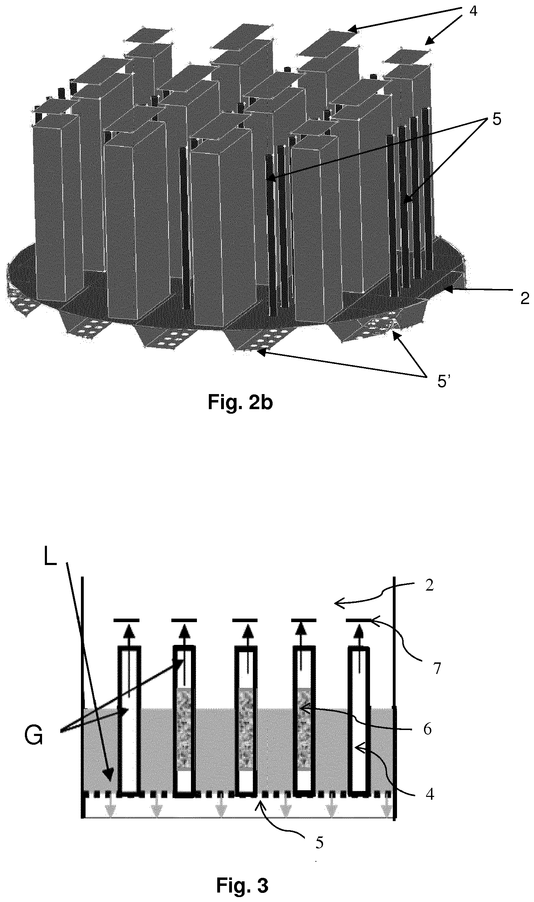

Les distributeurs standards 2 utilisés dans les colonnes d'absorption/régénération ou encore de distillation sont généralement constitués d'un plateau collecteur/distributeur équipé de cheminées 4 (aussi appelées caissons) pour le passage du gaz à travers le plateau. Selon un mode de fonctionnement contre-courant, chaque cheminée 4 permet le passage du gaz de la partie basse de la colonne vers la partie haute de la colonne 1. Les cheminées 4 sont en saillie d'un côté du plateau 2, et sont perpendiculaires à celui-ci. Chaque cheminée 4 est formée de plusieurs parois, par exemple cylindriques (par exemple tel que présenté en figure 2a) ou parallélépipédiques (par exemple tel que présenté en figure 2b), qui délimitent un volume interne ouvert de part et d'autre du plateau 2. Selon le mode de fonctionnement contre-courant, le liquide quant à lui est distribué du haut vers le bas de la colonne, par exemple via des orifices 5 positionnés sur le plateau 2 (tel que présenté en figure 2a) ou encore par des cheminées pour le passage du liquide 6 en saillie sur la partie supérieure du plateau (par exemple tel que présenté en figure 2b et tel que décrit dans la demande de brevet FR 3006599 (WO 2014/199035)), ces cheminées pour le passage du liquide 5 pouvant communiquer avec des moyens de distribution secondaire 5' du liquide en saillie sur la partie inférieure du plateau. Pour éviter que le liquide ne passe dans les cheminées pour le passage du gaz 4, l'ouverture d'échappement ou d'arrivée du gaz au-dessus du plateau est préférentiellement recouverte par un chapeau (appelé également biseau).

Afin d'assurer une bonne opérabilité de la colonne ainsi que le respect des spécifications concernant les produits issus du traitement de gaz par exemple, il est nécessaire que le système de distribution de la colonne assure une distribution des phases gaz et liquide la plus homogène possible.

Parmi les plateaux distributeurs selon l'art antérieur visant plus particulièrement à améliorer la distribution du gaz plus, on connaît par exemple le brevet FR 2936717, dans lequel le gaz monte dans des cheminées rectangulaires et passe par des trous/fentes latérales, les fentes de deux profilés voisins sont décalées d'un demi-pas. On connaît également le brevet US 5464573, dans lequel des ailettes permettent de collecter le liquide et de le cheminer vers des caissons reliés par un canal central de collecte, le gaz passant par l'espace entre les caissons puis entre les ailettes.

Les documents US 4 427 605 A, EP 0 206 524 A2 divulguent également des plateaux distributeurs.

Toutefois, les plateaux distributeurs selon l'art antérieur peuvent présenter des vitesses débitantes de gaz non parfaitement homogènes, notamment sur les bords de tels plateaux, et ceci est d'autant plus accentué que le diamètre de la colonne est grand.

A noter que de manière générale, l'homogénéité de la distribution du gaz est d'autant plus difficile à atteindre que le garnissage utilisé comme contacteur gaz/liquide est capacitif. On appelle capacité d'un garnissage, la quantité de gaz maximum pouvant circuler sans engorger la colonne par rapport à un débit liquide donné, c'est-à-dire sans créer d'accumulation de liquide dans une partie du garnissage. La capacité d'un garnissage dépend de nombreux facteurs (angle des canaux, formes des éléments, etc.), elle est généralement inversement proportionnelle à sa surface spécifique (également appelée aire géométrique) qui est la surface de contact par unité de volume (exprimée en m²/m³).

La présente invention concerne un plateau distributeur permettant une distribution plus homogène des vitesses du gaz en sortie des cheminées de passage du gaz, notamment dans le cas de colonnes de large diamètre (typiquement de diamètre au moins égal à 3 m), grâce à l'utilisation d'un matériau dispersif placé à l'intérieur d'au moins une desdites cheminées pour le passage dudit gaz.

### Le dispositif selon l'invention

L'invention concerne un plateau distributeur pour colonne d'échange de chaleur et/ou de matière entre un gaz et un liquide selon la revendication 1.

Selon une mise en œuvre de l'invention, ledit matériau dispersif peut être réparti uniformément à l'intérieur de ladite cheminée selon une direction longitudinale et selon un plan transversal.

Avantageusement, ledit matériau dispersif peut être réparti sur une épaisseur au moins supérieure à 10 cm.

Selon une mise en œuvre de l'invention, ledit matériau dispersif peut être un garnissage vrac ou structuré.

Selon une variante de réalisation de l'invention, ladite cheminée pour le passage exclusif dudit gaz peut être sensiblement parallélépipédique.

Selon une autre variante de réalisation de l'invention, ladite cheminée pour le passage exclusif dudit gaz peut être sensiblement cylindrique.

Avantageusement, l'ensemble desdites cheminées (4) pour ledit passage exclusif dudit gaz peuvent être pourvues dudit matériau dispersif au gaz.

Selon une mise en œuvre de l'invention, lesdits moyens pour le passage du liquide peuvent comprendre une pluralité d'orifices et/ou de cheminées pour le passage du liquide.

Selon une variante de réalisation de l'invention, lesdites cheminées pour le passage du liquide peuvent être en saillie dans la partie supérieure dudit plateau et/ou dans la partie inférieure dudit plateau.

Selon une mise en oeuvre de l'invention, ledit plateau peut comporter une pluralité de moyens de passage du liquide uniformément répartis sur ledit plateau.

Selon une variante de réalisation de l'invention, lesdits moyens pour le passage du liquide peuvent être formés par des déversoirs placés en périphérie dudit plateau.

En outre, l'invention concerne une colonne d'échange de chaleur et/ou de matière entre un gaz et un liquide, dans laquelle les deux fluides sont mis en contact au moyen d'au moins un contacteur gaz/liquide, ladite colonne comportant au moins un plateau distributeur selon l'invention pour distribuer lesdits fluides sur ledit contacteur gaz/liquide.

Selon un mode de mise en œuvre de la colonne d'échange selon l'invention, au moins un plateau distributeur selon l'invention peut être placé en fond de colonne.

Selon un mode de mise en œuvre de la colonne d'échange selon l'invention, ladite colonne peut comporter une pluralité de sections, chacune desdites sections pouvant comprendre un contacteur gaz/liquide et un plateau distributeur selon l'invention.

De plus, l'invention concerne une utilisation d'une colonne d'échange selon l'invention pour un procédé de traitement de gaz, de captage du CO2, de distillation, de déshydratation ou de transformation de l'air.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
Les figures 1a et 1b, déjà décrites, illustrent des cas particulier respectivement d'un haut et d'un fond de colonne de traitement de gaz ou de capture de CO_{2,} équipée d'un plateau distributeur.
Les figures 2a et 2b, déjà décrites, illustrent des plateaux distributeurs selon l'art antérieur.
La figure 3 illustre un plateau distributeur selon un premier mode de réalisation de l'invention.
La figure 4 illustre un plateau distributeur selon un second mode de réalisation de l'invention.
La figure 5 illustre une mise en œuvre d'un plateau distributeur selon l'invention.
Les figures 6a et 6c présentent respectivement la vitesse moyenne et la vitesse verticale en aval du distributeur selon l'art antérieur, et les figures 6b et 6d présentent respectivement la vitesse moyenne et la vitesse verticale en aval d'une variante d'un distributeur selon l'invention.
Les figures 7a et 7c présentent respectivement la vitesse moyenne et la vitesse verticale en aval d'une variante d'un distributeur selon l'invention pour un diamètre de colonne D=3.76m, et les figures 7b et 7d présentent respectivement la vitesse moyenne et la vitesse verticale en aval de la même variante d'un distributeur selon l'invention pour un diamètre de colonne D=7m.

### Description détaillée de l'invention

La présente invention concerne un plateau distributeur pour colonne d'échange de chaleur et/ou de matière entre un gaz et un liquide, comportant au moins une cheminée en saillie sur la partie supérieure du plateau pour le passage exclusif du gaz à travers ledit plateau et au moins un moyen pour le passage du liquide à travers le plateau. Classiquement, le plateau distributeur est sensiblement cylindrique. On appelle partie supérieure du plateau distributeur la partie du plateau distributeur qui est orientée du côté du haut de la colonne d'échange.

Le plateau distributeur selon l'invention est adapté pour des écoulements à contre-courant dans la colonne d'échange de chaleur et/ou de matière, le gaz montant à travers les cheminées pour le passage exclusif du gaz et le liquide descendant à travers les moyens de passage du liquide.

Selon l'invention, les cheminées pour le passage exclusif du gaz sont en saillie sur la partie supérieure du plateau (et de fait orientées vers le haut de la colonne). Ces cheminées permettent, pour une colonne fonctionnant à contre-courant, le passage du gaz du dessous du plateau (ou partie inférieure) vers le dessus du plateau (ou partie supérieure).

Selon l'invention, les cheminées pour le passage exclusif du gaz comportent au moins un moyen pour empêcher le passage du liquide au travers de la cheminée. Ce moyen peut être un chapeau, surélevé par rapport à la cheminée. Un tel chapeau permet au gaz de s'échapper par l'espace formé entre le chapeau et la cheminée, mais empêche le liquide (arrivant par le haut de la partie supérieure du plateau puisque le plateau distributeur selon l'invention s'inscrit dans un fonctionnement à contre-courant) de pénétrer dans la cheminée.

Avantageusement, les cheminées pour le passage exclusif du gaz ont une forme sensiblement parallélépipédique, et préférentiellement rectangulaire. En effet, une telle géométrie permet une large ouverture au passage du gaz, ce qui permet de limiter les pertes de charge. De plus, lorsque le plateau distributeur comporte plusieurs cheminées pour le passage du gaz, celles-ci peuvent être disposées parallèlement les unes par rapport aux autres. Alternativement, les cheminées pour le passage exclusif du gaz ont une forme sensiblement cylindrique.

Selon l'invention, l'intérieur d'au moins une desdites cheminées pour le passage exclusif du gaz est pourvu d'un matériau dispersif par rapport au gaz, c'est-à-dire un matériau qui assure une dispersion du gaz lors de son passage dans la cheminée, générant ainsi une meilleure répartition (au sens de l'homogénéisation) du gaz à sa sortie de la cheminée. Avantageusement, toutes les cheminées du plateau distributeur sont pourvues d'un matériau dispersif, de manière à favoriser une homogénéisation du flux de gaz en aval du plateau distributeur.

Avantageusement, le matériau dispersif est réparti à l'intérieur de la ou des cheminées pour le passage exclusif du gaz de manière uniforme selon une direction longitudinale (la direction longitudinale est la direction d'un axe allant de la partie inférieure du plateau vers la partie supérieure du plateau) et de manière uniforme selon un plan transversal. De cette manière, la dispersion du gaz traversant la ou les cheminées est la plus homogène possible, ce qui permet un flux de gaz en sortie de la ou des cheminées constant sur une section correspondant à la section de la ou des cheminées.

Avantageusement, le matériau dispersif est uniformément réparti sur une épaisseur comprise au moins égale à 10 cm le long de la direction longitudinale des cheminées. De cette manière, les particules de gaz traversant de telles épaisseurs de matériau dispersif sont suffisamment dispersées pour assurer un flux de gaz homogène en sortie des cheminées en question. Avantageusement, le matériau dispersif est uniformément réparti sur toute la hauteur des cheminées pour le passage exclusif du gaz.

Préférentiellement, le matériau dispersif qui est réparti à l'intérieur d'au moins une cheminée du passage exclusif du gaz est un garnissage vrac ou de type structuré, préférentiellement de type structuré. En effet, un garnissage structuré permet une densité uniforme de milieu dispersif. On appelle garnissage vrac, des empilements anarchiques, aléatoires, d'éléments unitaires possédant des formes particulières, par exemple des anneaux, des spirales, etc. Les échanges de chaleur et/ou de matière se réalisent au sein de ces éléments unitaires. Ces éléments unitaires peuvent être en métal, en céramique, en plastique ou en matériaux analogues. Les demandes de brevet EP 1478457 et WO 2008/067031 décrivent deux exemples d'élément unitaire de garnissage vrac. Le garnissage vrac offre des qualités intéressantes en termes d'efficacité de transfert, faible perte de charge et simplicité d'installation. L'aire géométrique du garnissage vrac peut être comprise entre 70 et 250 m²/m³. On appelle garnissage structuré, un empilement de plaques ou de feuilles pliées, ondulées (« corrugated » en anglais, c'est-à-dire sensiblement ondulé avec des angles droits), et arrangées de manière organisée sous forme de grand blocs comme décrit notamment dans les demandes de brevet FR 2913353 (US 2010/0213625), US 3,679,537 et US 4,296,050. Les échanges de chaleur et/ou de matière se réalisent sur ces plaques. Les garnissages structurés ont l'avantage d'offrir une grande aire géométrique pour un diamètre représentatif donné. L'aire géométrique du garnissage structuré peut être comprise entre 100 et 500 m²/m³.

Avantageusement, l'ensemble des cheminées pour ledit passage exclusif dudit gaz sont pourvues d'un matériau dispersif du gaz.

Les moyens pour le passage du liquide permettent le passage du liquide depuis la partie supérieure du plateau vers la partie inférieure.

Selon un mode de réalisation de l'invention, et notamment dans le cas d'une colonne d'échange formée d'une pluralité de sections, chaque section étant formée par un contacteur gaz/liquide et un plateau distributeur, les moyens pour le passage du liquide à travers le plateau sont composés d'un ensemble de cheminées pouvant être en saillie du côté supérieur du plateau et/ou du côté inférieur du plateau. De manière à ce que le liquide passe par les cheminées pour le passage de liquide, et pas par les cheminées de passage exclusive du gaz, les cheminées pour le passage de liquide sont avantageusement moins haute par rapport aux cheminées pour le passage de gaz. Les cheminées pour le passage du liquide peuvent être sensiblement cylindriques. Selon un autre mode de réalisation de l'invention, les moyens de passage du liquide à travers le plateau sont composés d'un ensemble d'orifices réalisés dans le plateau. Selon un autre exemple de réalisation de l'invention (par exemple, en configuration inter-lits), les moyens pour le passage du liquide à travers le plateau comportent à la fois des cheminés et des orifices. Ces moyens pour le passage du liquide sont disposés entre les cheminées pour le passage exclusif du gaz. Le nombre de moyens pour le passage du liquide est avantageusement supérieur au nombre de cheminées pour le passage exclusif du gaz. Le pas des moyens pour le passage du liquide peut être triangulaire ou carré. Afin de réaliser une bonne distribution du liquide et une bonne répartition du liquide sur le contacteur gaz/liquide, les moyens pour le passage du liquide sont uniformément répartis sur le plateau, c'est-à-dire situés sur la totalité de la surface du plateau, entre les cheminées pour le passage du gaz.

Alternativement et notamment dans le cas d'un plateau distributeur placé en fond de colonne d'échange, les moyens pour le passage du liquide correspondent à des déversoirs. Les déversoirs des plateaux distributeurs sont situés classiquement en périphérie du plateau pour les plateaux à une passe, mais peuvent être situés sur des sections centrales pour les plateaux multi-passes, en fonction du diamètre de la colonne.

Selon une variante de l'invention, non représentée mais telle que décrite dans la demande EP 3034142 (US 20160175733), le plateau distributeur comporte au moins deux niveaux de collecte et de distribution du liquide, une partie du liquide du niveau supérieur passant dans le niveau inférieur avant d'être distribuée sous la base du plateau, alors qu'une autre partie du liquide contenue dans le niveau supérieur est directement distribuée vers la base du niveau inférieur. Cette configuration permet d'améliorer la distribution du liquide dans le cas de forts débits de liquide, et notamment dans le cas d'une large plage de variation du débit liquide, tout en conservant un encombrement réduit.

La figure 3 illustre un exemple non limitatif de plateau distributeur selon l'invention. La figure 3 est une vue en coupe d'une portion du plateau distributeur. Ainsi la figure 3 présente un plateau distributeur 2 comprenant une pluralité de cheminées 4 pour le passage exclusif du gaz G, en saillie sur la partie supérieure du plateau, ainsi qu'une pluralité d'orifices 5 permettant le passage du liquide L sous le plateau 2. Selon cet exemple de réalisation de l'invention, certaines des cheminées 4 pour le passage exclusif du gaz sont pourvues d'un matériau dispersif 6 par rapport au gaz et certaines des cheminées 4 pour le passage exclusif du gaz ne comportent pas de matériau dispersif 6 par rapport au gaz. Selon cet exemple de réalisation, l'ensemble des cheminées pour le passage exclusif du gaz comportent un chapeau 7 empêchant le passage du liquide par la cheminée.

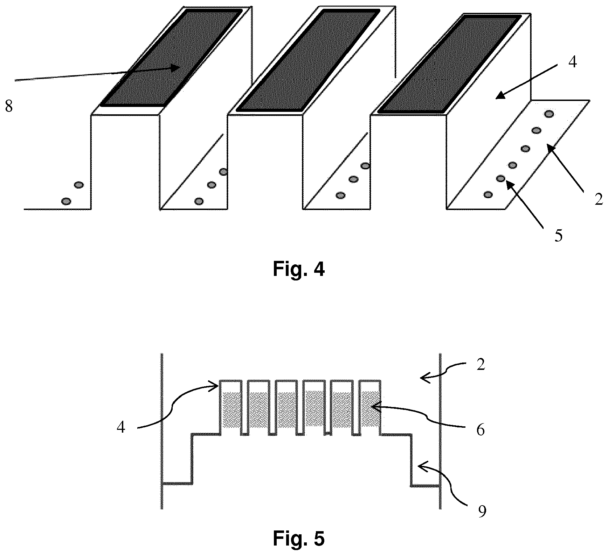

Selon l'exemple non limitatif de la figure 4, les cheminées 4 pour le passage exclusif du gaz sont de forme parallélépipédique et sont en saillie sur la partie supérieure du plateau 2. Selon cet exemple, les cheminées pour le passage exclusif du gaz 4 comportent une ouverture large 8 permettant le passage du gaz à leur surface. Selon cet exemple, les moyens pour le passage du liquide 5 au travers du plateau correspondent à des orifices placés entre les cheminées 4 pour le passage du gaz. Toutefois, le moyen pour le passage du liquide peut être réalisé par d'autres moyens, notamment par des cheminées pour le passage du liquide, ou encore par des déversoirs.

Selon un autre exemple non limitatif présenté en figure 5, les cheminées 4 pour le passage exclusif du gaz sont de forme parallélépipédique et sont en saillie sur la partie supérieure du plateau 2, et le plateau 2 comprend des moyens pour le passage du liquide 5 au travers du plateau sous la forme de déversoirs 9 placés en périphérie du plateau 2. Selon ce mode de réalisation de l'invention, le liquide s'écoule depuis la partie supérieure du plateau vers la partie inférieure du plateau, en passant par un déversoir 9. Le gaz provenant de la partie inférieure du plateau s'écoule à contre-courant dans la colonne, à travers les cheminées pour le passage exclusif du gaz, celles-ci étant, selon cet exemple de réalisation de l'invention, toutes pourvues d'un matériau dispersif par rapport au gaz.

L'invention concerne également une colonne d'échange de matière et/ou de chaleur entre deux fluides, dans laquelle deux fluides sont mis en contact au moyen d'au moins un contacteur gaz/liquide, la colonne comprenant au moins une première entrée d'un fluide liquide, au moins une deuxième entrée d'un fluide gazeux, au moins une première sortie d'un fluide gazeux et au moins une deuxième sortie d'un fluide liquide. La colonne comporte en outre au moins un plateau distributeur tel que décrit ci-dessus, pour permettre une distribution homogène du gaz sur le contacteur gaz/liquide.

Selon un mode de réalisation de la présente invention, la colonne comporte un plateau distributeur tel que décrit ci-dessus placé en fond de colonne. Avantageusement, le plateau distributeur de fond de colonne est précédé par un dispositif de pré-distribution de la phase gaz.

Selon une mise en œuvre de l'invention, la colonne est formée de plusieurs sections, chaque section comprenant un contacteur gaz/liquide et un plateau distributeur tel que décrit ci-dessus.

De manière avantageuse, le contacteur gaz/liquide est un lit de garnissage structuré. Alternativement, le contacteur gaz/liquide est un lit de garnissage vrac.

De préférence, le gaz et le liquide s'écoulent dans la colonne à contre-courant.

La colonne selon l'invention peut être utilisée dans des procédés de traitement de gaz, de captage de CO₂ (par exemple par lavage aux amines), de distillation, de déshydratation, ou de transformation de l'air... De plus, l'invention peut être utilisée avec tout type de solvant.

### Exemple de réalisation

Pour illustrer les avantages de la présente invention, on se propose de comparer les résultats obtenus par une colonne d'échange équipée de la présente invention à ceux obtenus par une colonne selon l'art antérieur (c'est-à-dire sans matériau dispersif au gaz dans au moins une cheminée pour le passage exclusif du gaz).

Ainsi, selon un premier exemple, on considère une colonne d'échange de diamètre 3,76 m. Cet colonne comprend un seul plateau distributeur selon l'invention, placé en fond de colonne. Ce plateau comporte des cheminées pour le passage exclusif du gaz de forme rectangulaire, chacune des cheminées étant surmontées par un chapeau, chacune des cheminées étant pourvues d'un matériau dispersif par rapport au gaz, sous la forme d'un garnissage structuré. Les principales caractéristiques de la colonne selon l'invention sont détaillées ci-après :
- Hauteur du plateau distributeur : 1.4 m
- Nombre de cheminées pour le passage exclusif du gaz : 6
- Hauteur des cheminées : 0.555m
- Epaisseur de garnissage structuré à l'intérieur des cheminées de gaz : 0.555m
- Distance entre cheminées et chapeaux : 0.1m
- Distance entre sortie cheminées et lit de garnissage (le garnissage étant modélisé par un milieu poreux) : 0.9m
- Vitesse superficielle du gaz dans la colonne : Vsg =0.35 m/s
- Facteur cinétique gaz = 2.7 Pa^{0.5}
- Pression : Pression atmosphérique
- Température : 25°C

Les performances, en termes de distribution du gaz, de cette colonne selon l'invention sont comparées à celle d'une colonne selon l'art antérieur (c'est-à-dire sans matériau dispersif au gaz dans au moins une cheminée pour le passage exclusif du gaz) ayant les mêmes caractéristiques, à l'exception de la présence d'un matériau dispersif à l'intérieur de l'ensemble des cheminées pour le passage du gaz.

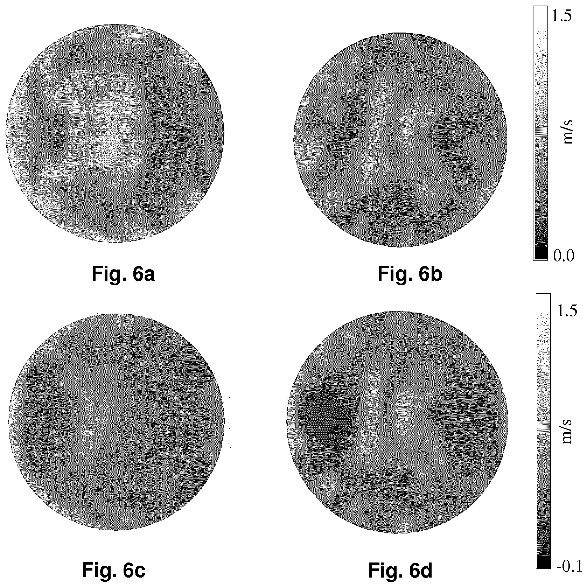

Les figures 6a et 6c présentent respectivement la vitesse moyenne (ou norme de la vitesse) et la vitesse verticale (ou vitesse débitante) en aval du distributeur selon l'art antérieur, et les figures 6b et 6d présentent respectivement la vitesse moyenne (ou norme de la vitesse) et la vitesse verticale (ou vitesse débitante) en aval du distributeur selon l'invention. En comparant les résultats obtenus avec le plateau distributeur selon l'art antérieur et selon l'invention, il apparaît clairement que les vitesses sont plus homogènes avec une colonne disposant du plateau distributeur selon l'invention. On peut notamment remarquer, dans le cas du plateau distributeur selon l'invention, la disparition des survitesses observées sur les bords de la paroi de la colonne dans le cas de la colonne selon l'art antérieur.

Dans un deuxième exemple de réalisation de l'invention, on considère une colonne d'échange comportant un plateau distributeur selon l'invention ayant les caractéristiques décrites à l'exemple précédent, à l'exception du fait que le diamètre de la colonne est de 7m au lieu de 3,76m. Les performances, en termes de distribution du gaz, de cette colonne selon l'invention sont comparées à celle de la colonne selon l'invention de diamètre 3.76m du premier exemple décrit précédemment. Les résultats entre les deux colonnes sont comparés à 5cm en amont du lit de garnissage

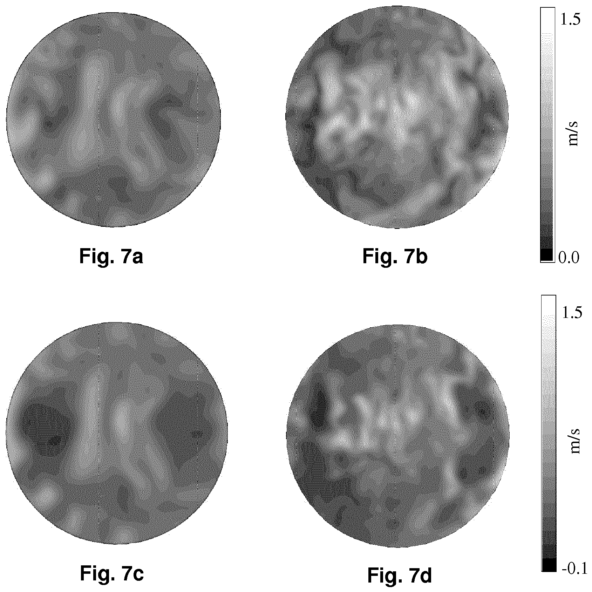

Les figures 7a et 7c présentent respectivement la vitesse moyenne (ou norme de la vitesse) et la vitesse verticale (ou vitesse débitante) en aval d'un distributeur selon le premier exemple de réalisation de l'invention (diamètre de colonne D=3.76m), et les figures 7b et 7d présentent respectivement la vitesse moyenne (ou norme de la vitesse) et la vitesse verticale (ou vitesse débitante) en aval d'un distributeur selon le second exemple de réalisation de l'invention (diamètre de colonne D=7m). On peut observer sur ces figures que les vitesses restent, malgré l'augmentation du diamètre de la colonne, homogènes, y compris sur les bords de la colonne. Ainsi, il apparaît clairement que le plateau distributeur selon l'invention permet d'assurer un bon fonctionnement même dans le cas de colonnes de grand diamètre.

Ainsi, le plateau distributeur selon l'invention permet une distribution plus homogène du gaz au sein d'une colonne d'échange. Une telle amélioration peut permettre une réduction de la hauteur entre le plateau distributeur et le contacteur gaz/liquide, sans risque pour l'engorgement de la colonne, et ce même dans le cas de colonne d'échange de large diamètre. Le plateau distributeur selon l'invention contribue donc à un meilleur contact entre les phases gaz et liquide, et de ce fait à un meilleur transfert.

## Revendications

1. Plateau distributeur (2) pour des écoulements à contre-courant dans une colonne d'échange de chaleur et/ou de matière entre un gaz et un liquide comportant au moins une cheminée (4) en saillie sur la partie supérieure dudit plateau (2) pour le passage exclusif dudit gaz à travers ledit plateau et au moins un moyen pour le passage dudit liquide (5) à travers ledit plateau (2), ledit gaz montant à travers ladite cheminée pour le passage exclusif dudit gaz et ledit liquide descendant à travers ledit moyen pour le passage dudit liquide, ladite cheminée (4) pour le passage exclusif dudit gaz comportant au moins un chapeau surélevé par rapport à ladite cheminée de manière à permettre audit gaz de s'échapper par l'espace formé entre ledit chapeau et ladite cheminée et de manière à empêcher ledit liquide arrivant par le haut de ladite partie supérieure dudit plateau de pénétrer dans ladite cheminée **caractérisé en ce que** l'intérieur d'au moins une desdites cheminées pour le passage exclusif dudit gaz est pourvu d'un matériau dispersif par rapport audit gaz, ledit matériau dispersif assurant une dispersion dudit gaz lors de son passage dans ladite cheminée, de manière à générer une meilleure homogénéisation dudit gaz en sortie de ladite cheminée.

2. Plateau selon la revendication 1, dans lequel ledit matériau dispersif est réparti uniformément à l'intérieur de ladite cheminée (4) pour le passage exclusif dudit gaz selon une direction longitudinale et selon un plan transversal.

3. Plateau selon la revendication 2, dans lequel ledit matériau dispersif est réparti sur une épaisseur au moins supérieure à 10 cm.

4. Plateau selon l'une des revendications précédentes, dans lequel ledit matériau dispersif est un garnissage vrac ou structuré.

5. Plateau selon l'une des revendications précédentes, dans lequel ladite cheminée (4) pour le passage exclusif dudit gaz est sensiblement parallélépipédique.

6. Plateau selon l'une des revendications 1 à 4, dans lequel ladite cheminée (4) pour le passage exclusif dudit gaz est sensiblement cylindrique.

7. Plateau selon l'une des revendications précédentes, dans lequel l'ensemble desdites cheminées (4) pour ledit passage exclusif dudit gaz sont pourvues dudit matériau dispersif au gaz.

8. Plateau selon l'une des revendications précédentes, dans lequel lesdits moyens pour le passage du liquide (5) comprennent une pluralité d'orifices (5) et/ou de cheminées pour le passage du liquide (5).

9. Plateau selon la revendication 8, dans lequel lesdites cheminées pour le passage du liquide (5) sont en saillie dans la partie supérieure dudit plateau et/ou dans la partie inférieure dudit plateau.

10. Plateau selon l'une des revendications précédentes, dans lequel ledit plateau comporte une pluralité de moyens de passage du liquide (5) uniformément répartis sur ledit plateau (2).

11. Plateau selon l'une des revendications 1 à 7, dans lequel lesdits moyens pour le passage du liquide sont formés par des déversoirs (9) placés en périphérie dudit plateau.

12. Colonne d'échange de chaleur et/ou de matière entre un gaz et un liquide, dans laquelle les deux fluides sont mis en contact au moyen d'au moins un contacteur gaz/liquide (3), **caractérisé en ce que** ladite colonne comporte au moins un plateau distributeur (2) selon l'une des revendications précédentes pour distribuer lesdits fluides sur ledit contacteur gaz/liquide (3).

13. Colonne d'échange selon la revendication 12, dans laquelle au moins un plateau distributeur selon l'une des revendications 1 à 11 est placé en fond de colonne.

14. Colonne d'échange selon la revendication 12, dans laquelle ladite colonne comporte une pluralité de sections, chacune desdites sections comprenant un contacteur gaz/liquide et un plateau distributeur selon l'une des revendications 1 à 11.

15. Utilisation d'une colonne selon l'une des revendications 12 à 14, pour un procédé de traitement de gaz, de captage du CO₂, de distillation, de déshydratation ou de transformation de l'air.

## Patentansprüche

1. Verteilerplatte (2) für Gegenstromdurchläufe in einer Wärme- und/oder Materialaustauschkolonne zwischen einem Gas und einer Flüssigkeit, umfassend mindestens einen Abzug (4), der auf dem oberen Teil der Platte (2) für den ausschließlichen Durchgang des Gases durch die Platte herausragt, und mindestens ein Mittel für den Durchgang der Flüssigkeit (5) durch die Platte (2), wobei das Gas durch den Abzug für den ausschließlichen Durchgang des Gases aufsteigt, und wobei die Flüssigkeit durch das Mittel für den Durchgang der Flüssigkeit absteigt, wobei der Abzug (4) für den ausschließlichen Durchgang des Gases mindestens eine in Bezug zum Abzug überhöhte Kappe umfasst, um es dem Gas zu ermöglichen, durch den zwischen der Kappe und dem Abzug gebildeten Raum auszutreten, und um die von oben vom oberen Teil der Platte ankommende Flüssigkeit daran zu hindern, in den Abzug einzudringen, **dadurch gekennzeichnet, dass** das Innere mindestens eines der Abzüge für den ausschließlichen Durchgang des Gases mit einem in Bezug zum Gas dispergierenden Material versehen ist, wobei das dispergierende Material eine Dispersion des Gases bei seinem Durchgang im Abzug gewährleistet, um eine bessere Homogenisierung des Gases am Ausgang des Abzugs zu erzeugen.

2. Platte nach Anspruch 1, bei der das dispergierende Material einheitlich innerhalb des Abzugs (4) für den ausschließlichen Durchgang des Gases in eine Längsrichtung und in einer Querebene verteilt ist.

3. Platte nach Anspruch 2, bei der das dispergierende Material auf einer Dicke mindestens größer als 10 cm verteilt ist.

4. Platte nach einem der vorhergehenden Ansprüche, bei der das dispergierende Material eine lose oder strukturierte Füllung ist.

5. Platte nach einem der vorhergehenden Ansprüche, bei der der Abzug (4) für den ausschließlichen Durchgang des Gases im Wesentlichen parallelepipedisch ist.

6. Platte nach einem der Ansprüche 1 bis 4, bei der der Abzug (4) für den ausschließlichen Durchgang des Gases im Wesentlichen zylindrisch ist.

7. Platte nach einem der vorhergehenden Ansprüche, bei der die Gesamtheit der Abzüge (4) für den ausschließlichen Durchgang des Gases mit dem für das Gas dispergierenden Material versehen ist.

8. Platte nach einem der vorhergehenden Ansprüche, bei der die Mittel für den Durchgang der Flüssigkeit (5) eine Vielzahl von Öffnungen (5) und/oder Abzügen für den Durchgang der Flüssigkeit (5) umfassen.

9. Platte nach Anspruch 8, bei der die Abzüge für den Durchgang der Flüssigkeit (5) im oberen Teil der Platte und/oder im unteren Teil der Platte herausragen.

10. Platte nach einem der vorhergehenden Ansprüche, wobei die Platte eine Vielzahl von Durchgangsmitteln der Flüssigkeit (5) umfasst, die einheitlich auf der Platte (2) verteilt sind.

11. Platte nach einem der Ansprüche 1 bis 7, bei der die Mittel für den Durchgang der Flüssigkeit von Überlaufrinnen (9) gebildet sind, die an der Peripherie der Platte angeordnet sind.

12. Wärme- und/oder Materialaustauschkolonne zwischen einem Gas und einer Flüssigkeit, bei der die zwei Fluide mit Hilfe mindestens eines Gas-Flüssig-Kontaktierers (3) in Kontakt gebracht werden, **dadurch gekennzeichnet, dass** die Kolonne mindestens einer Verteilerplatte (2) nach einem der vorhergehenden Ansprüche umfasst, um die Fluide auf dem Gas-Flüssig-Kontaktierer (3) zu verteilen.

13. Austauschkolonne nach Anspruch 12, bei der mindestens eine Verteilerplatte nach einem der Ansprüche 1 bis 11 am Kolonnenboden angeordnet ist.

14. Austauschkolonne nach Anspruch 12, wobei die Kolonne eine Vielzahl von Abschnitten umfasst, wobei jeder der Abschnitte einen Gas-Flüssig-Kontaktierer und eine Verteilerplatte nach einem der Ansprüche 1 bis 11 umfasst.

15. Verwendung einer Kolonne nach einem der Ansprüche 12 bis 14 für ein Verfahren zur Gasbehandlung, Abscheidung des CO₂, Destillation, Dehydrierung oder Umwandlung der Luft.

## Claims

1. Distribution tray (2) for counter-current flows in a heat and/or material exchange column between a gas and a liquid comprising at least one chimney (4) protruding on the upper part of said tray (2) for the exclusive passage of said gas through said tray and at least one means for the passage of said liquid (5) through said tray (2), said gas rising through said chimney for the exclusive passage of said gas and said liquid descending through said means for the passage of said liquid, said chimney (4) for the exclusive passage of said gas comprising at least one cover that is raised relative to said chimney so as to allow said gas to escape through the space formed between said cover and said chimney and so as to prevent said liquid arriving from above said upper part of said tray from penetrating into said chimney, **characterized in that** the interior of at least one of said chimneys for the exclusive passage of said gas is provided with a material that is dispersive with respect to said gas, said dispersive material ensuring a dispersion of said gas in its passage in said chimney, so as to generate a better homogenization of said gas at the output of said chimney.

2. Tray according to Claim 1, in which said dispersive material is distributed uniformly inside said chimney (4) for the exclusive passage of said gas in a longitudinal direction and on a transverse plane.

3. Tray according Claim 2, in which said dispersive material is distributed to a thickness at least greater than 10 cm.

4. Tray according to one of the preceding claims, in which said dispersive material is a loose or structured packing.

5. Tray according to one of the preceding claims, in which said chimney (4) for the exclusive passage of said gas is substantially parallelepipedal.

6. Tray according to one of Claims 1 to 4, in which said chimney (4) for the exclusive passage of said gas is substantially cylindrical.

7. Tray according to one of the preceding claims, in which all of said chimneys (4) for said exclusive passage of said gas are provided with said gas-dispersive material.

8. Tray according to one of the preceding claims, in which said means for the passage of the liquid (5) comprise a plurality of orifices (5) and/or of chimneys for the passage of the liquid (5).

9. Tray according to Claim 8, in which said chimneys for the passage of the liquid (5) protrude in the upper part of said tray and/or in the lower part of said tray.

10. Tray according to one of the preceding claims, in which said tray comprises a plurality of means for the passage of the liquid (5) uniformly distributed on said tray (2).

11. Tray according to one of Claims 1 to 7, in which said means for the passage of the liquid are formed by troughs (9) placed at the periphery of said tray.

12. Heat and/or material exchange column between a gas and a liquid, in which the two fluids are placed in contact by means of at least one gas/liquid contactor (3), **characterized in that** said column comprises at least one distribution tray (2) according to one of the preceding claims for distributing said fluids on said gas/liquid contactor (3).

13. Exchange column according to Claim 12, in which at least one distribution tray according to one of Claims 1 to 11 is placed at the bottom of the column.

14. Exchange column according to Claim 12, in which said column comprises a plurality of sections, each of said sections comprising a gas/liquid contactor and a distribution tray according to one of Claims 1 to 11.

15. Use of a column according to one of Claims 12 to 14, for a gas treatment, CO₂ catchment, distillation, dehydration or air transformation method.
